(19) Europäisches Patentamt
European Patent Office
Office européen des brevets

(11) EP 0 731 138 B1

(12) **EUROPÄISCHE PATENTSCHRIFT**

(45) Veröffentlichungstag und Bekanntmachung des Hinweises auf die Patenterteilung:
**10.05.2000 Patentblatt 2000/19**

(51) Int Cl.7: **C08L 55/02**, C08L 57/00

(21) Anmeldenummer: **96102649.9**

(22) Anmeldetag: **22.02.1996**

(54) **Thermoplastische Formmassen vom ABS-Typ**

ABS thermoplastic moldings

Masses à mouler thermoplastiques de type ABS

(84) Benannte Vertragsstaaten:
**BE DE ES FR GB IT NL**

(30) Priorität: **06.03.1995 DE 19507749**

(43) Veröffentlichungstag der Anmeldung:
**11.09.1996 Patentblatt 1996/37**

(73) Patentinhaber: **BAYER AG**
**51368 Leverkusen (DE)**

(72) Erfinder:
- **Eichenauer, Herbert, Dr.**
  **41539 Dormagen (DE)**
- **Leitz, Edgar, Dr.**
  **41541 Dormagen (DE)**
- **Piejko, Karl-Erwin, Dr.**
  **51467 Bergisch Gladbach (DE)**
- **Alberts, Heinrich, Dr.**
  **51519 Odenthal (DE)**

(56) Entgegenhaltungen:
**EP-A- 0 505 799** **US-A- 4 713 420**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 731 138 B1

## Beschreibung

ABS-Formmassen werden schon seit vielen Jahren in großen Mengen als thermoplastische Harze für die Herstellung von Formteilen aller Art eingesetzt. Dabei reicht das Eigenschaftsspektrum dieser Harze von relativ spröde bis hochzäh.

Ein spezielles Einsatzgebiet für ABS-Formmassen ist die Herstellung von Formteilen mit hohen Anforderungen an die Zähigkeit bei Schlageinwirkung, insbesondere auch bei tiefen Temperaturen, sowie die Möglichkeit zur gezielten Einstellung (Abstufungen zwischen glänzend und matt) des Oberflächenglanzes (z.B. im Automobilbereich oder zur Herstellung von Gehäuseteilen).

ABS-Produkte mit hohen Zähigkeiten und relativ hohem Oberflächenglanz lassen sich unter Verwendung von herkömmlichem Emulsions-ABS bei Einsatz hoher Kautschukmengen herstellen; damit verbunden sind jedoch Nachteile bei anderen Eigenschaften, z.B. E-Modul, Wärmeformbeständigkeit und thermoplastische Fließfähigkeit.

ABS-Produkte mit relativ niedrigem Oberflächenglanz sind z.B. durch Polymerisation nach dem Lösungs- oder Massepolymerisationsverfahren zugänglich; allerdings werden nach diesem Verfahren keine Produkte mit hohen Tieftemperaturzähigkeiten erhalten.

Durch Abmischen von herkömmlichen Emulsions-ABS-Typen mit Lösungs- oder Masse-ABS-Typen lassen sich zwar punktuelle Verbesserungen erzielen (vgl. z.B. US-PS 4 430 478), die hohen Anforderungen an Zähigkeit und Fließfähigkeit bei gleichzeitigem Erhalt des für Masse-ABS charakteristischen niedrigen Oberflächenglanzes werden durch diese Werkstoffe jedoch nicht erfüllt.

Es wurde gefunden, daß durch eine Kombination von über Emulsionspolymerisation hergestellten ABS-Polymerisaten mit einer speziellen gezackten Struktur mit über Lösungs- oder Massepolymerisation hergestellten ABS-Polymerisaten Produkte mit den oben beschriebenen Eigenschaftskombinationen erhalten werden.

Gegenstand der Erfindung sind thermoplastische Formmassen enthaltend

A) 1 bis 60 Gew.-Teile mindestens eines durch Emulsionspolymerisation hergestellten teilchenförmigen Pfropfkautschukpolymeren vom ABS-Typ, bei dem mindestens 50 % der Pfropfkautschukteilchen (Anzahl) eine solche über transmissionselektronenmikroskopische Aufnahmen detektierbare Struktur aufweisen, in der die einzelnen Teilchen ungleichmäßige zellenförmige Einschlüsse von harzbildendem Polymer enthalten und die Oberfläche der Teilchen eine solche unregelmäßig gezackte Struktur zeigt, daß pro abgebildetem Teilchen 5 bis 30 solcher Zacken vorhanden sind, die sich von einem idealisierten runden Teilchen (mit einem Durchmesser d) durch einen Durchmesser $d + d/x$ mit $x = 3$ bis 15 unterscheiden, erhältlich durch Emulsionspolymerisation von harzbildenden Monomeren in Gegenwart des in Latexform vorliegenden Kautschuks mit einem Quellungsindex ≥30 (in Toluol) und mit einer Glastemperatur unterhalb von 0°C derart, daß während 25 bis 90 % der Gesamtreaktionszeit im Reaktionsgemisch eine Menge von 5 bis 70 Gew.-% (bezogen auf gesamtes bis zum jeweiligen Zeitpunkt eingesetztes) an nicht umgesetzten Monomer vorhanden ist,

B) 40 bis 99 Gew.-Teile mindestens eines durch Lösungs- oder Massepolymerisation hergestellten teilchenförmigen Pfropfkautschukpolymeren vom ABS-Typ mit der für Masse-ABS-Typen charakteristischen Morphologie und gegebenenfalls

C) 0 bis 200 Gew.-Teile mindestens eines thermoplastischen kautschukfreien Harzes.

Die Herstellung des Pfropfkautschukpolymeren A) erfolgt durch Emulsionspolymerisation von harzbildenden Monomeren in Gegenwart des in Latexform vorliegenden Kautschuks.

Dazu werden vorzugsweise 40 bis 90 Gew.-Teile, besonders bevorzugt 45 bis 85 Gew.-Teile und ganz besonders bevorzugt 50 bis 80 Gew.-Teile eines harzbildenden Monomeren (vorzugsweise ein Gemisch aus Styrol und Acrylnitril, das gegebenenfalls bis zu 50 Gew.-% (bezogen auf die Gesamtmenge der in der Pfropfpolymerisation eingesetzten Monomeren) eines oder mehrerer Comonomerer enthalten kann) in Gegenwart von 10 bis 60 Gew.-Teilen, bevorzugt 15 bis 55 Gew.-Teilen und besonders bevorzugt 20 bis 50 Gew.-Teilen (jeweils gerechnet als Feststoff) eines Kautschuklatex (vorzugsweise Polybutadienlatex) mit einem Quellungsindex ≥30, vorzugsweise ≥40 und besonders bevorzugt ≥50 (in Toluol) derart polymerisiert, daß während 25 bis 90 %, vorzugsweise 30 bis 80 % und besonders bevorzugt 35 bis 75 % der Gesamtreaktionszeit im Reaktionsgemisch eine Menge von 5 bis 70 Gew.-%, vorzugsweise 7,5 bis 60 Gew.-% und besonders bevorzugt 10 bis 50 Gew.-% (bezogen auf gesamtes bis zum jeweiligen Zeitpunkt eingesetztes Monomer) an nicht umgesetztem Monomer vorhanden ist.

Als Kautschuke zur Herstellung des Pfropfkautschukpolymeren A) werden solche mit einer Glasübergangstemperatur unter 0°C eingesetzt.

Geeignet sind z.B.:

- Dienkautschuke, das heißt, Homopolymerisate von konjugierten Dienen mit 4 bis 8 C-Atomen wie Butadien, Isopren, Chloropren oder deren Copolymerisate mit bis zu 60 Gew.-%, bevorzugt 1 bis 30 Gew.-%, eines Vinylmonomeren, z.B. Acrylnitril, Methacrylnitril, Styrol, $\alpha$-Methylstyrol, Halogenstyrole, $C_1$-$C_4$-Alkylstyrole, $C_1$-$C_6$-Alkylacrylate und -methacrylate, Alkylenglykoldi-acrylate und -methacrylate sowie Divinylbenzol;

- Acrylatkautschuke, das heißt, Homo- und Copolymerisate von $C_1$-$C_{10}$-Alkylacrylaten, z.B. Homopolymerisate von Ethylacrylat, Butylacrylat, 2-Ethylhexylacrylat oder Copolymerisate mit bis zu 40 Gew.-%, bevorzugt nicht mehr als 10 Gew.-% Mono-Vinylmonomeren, z.B. Styrol, Acrylnitril, Vinylbutylether, Acrylsäure(ester), Methacrylsäure (ester), Vinylsulfonsäure. Bevorzugt werden solche Acrylatkautschukhomo- bzw. -copolymerisate eingesetzt, die 0,01 bis 8 Gew.-% Divinyl- oder Polyvinylverbindungen und/oder N-Methylolacrylamid- (oder -methacrylamid)-Derivate enthalten, die als Vernetzer wirken, z.B. Divinylbenzol, Triallylcyanurat und wobei der Kautschuk C=C-Doppelbindungen enthält;

- Terpolymer-Kautschuke, das heißt, Copolymerisate aus mono-olefinischen Kohlenwasserstoffen, z.B. Ethylen, Propylen und Diene, z.B. Butadien, Cyclopentadien.

Bevorzugt sind Polybutadienkautschuke und SBR-Kautschuke mit bis zu 30 Gew.-% einpolymerisiertem Styrol, besonders bevorzugt ist Polybutadien.

Die zur Herstellung des Pfropfkautschukpolymeren A) einzusetzenden Kautschukpolymerisate weisen Quellungsindices (in Toluol) $\geq 30$, vorzugsweise $> 40$ und besonders bevorzugt $\geq 50$, auf. Dabei erfolgt die Ermittlung der Quellungsindices folgendermaßen:

1 g trockener stabilisierter kleingeschnittener Kautschuk wird mit 100 $cm^3$ Toluol versetzt und 24 h in einer braunen Flasche geschüttelt. Dann wird über einen doppelten Stoffilter abgesaugt bis das Filtrat keinen Niederschlag mehr aufweist. Nach dem Waschen mit weiterem Toluol wird der Niederschlag feucht gewogen. Danach wird bei 70°C im Trockenschrank bis zur Gewichtskonstanz getrocknet und erneut gewogen. Der Quellungsindex (QI) ergibt sich aus dem Verhältnis

$$QI = \frac{\text{Niederschlag (feucht)}}{\text{Niederschlag (trocken)}}.$$

Die Herstellung von Kautschuken mit solchen Quellungsindices ist prinzipiell bekannt, die geforderten Werte werden durch Anwendung geeigneter Reaktionsbedingungen (z.B. niedrige Reaktionstemperatur oder Zusatz von Molekulargewichtsreglern wie z.B. Mercaptane) eingestellt.

Die Größe der zur Herstellung des Pfropfkautschukpolymeren A) einzusetzenden Kautschukteilchen kann in weiten Grenzen variiert werden, z.B. sind prinzipiell mittlere Teilchendurchmesser von ca. 50 nm bis ca. 500 nm möglich; bevorzugt sind Kautschukteilchen mit mittleren Durchmessern von ca. 200 nm bis ca. 400 nm, besonders bevorzugt von ca. 250 nm bis ca. 350 nm. Hierbei bedeuten mittlere Teilchendurchmesser $d_{50}$-Werte, die durch Ultrazentrifugenmessung (vgl. W. Scholtan und H. Lange in Kolloid-Z. und Z. Polymere 250, S. 782-796 (1972) bestimmt wurden.

Bei der Pfropfkautschukherstellung eingesetzte harzbildende Monomere sind vorzugsweise Verbindungen mit einer Vinylgruppe, z.B. Styrol, $C_1$-$C_4$-alkylsubstituierte Styrole, $\alpha$-Methylstyrol, Acrylnitril, Methacrylnitril, Ester der Acrylsäure und/oder der Methacrylsäure mit $C_1$-$C_8$-aliphatischen oder cycloaliphatischen Alkoholen, N-substituiertes Maleinimid oder Mischungen daraus Besonders bevorzugt sind Mischungen aus Styrol und Acrylnitril, vorzugsweise im Gewichtsverhältnis 60:40 bis 80:20, wobei Styrol und/oder Acrylnitril teilweise durch copolymerisierbare Monomere, vorzugsweise durch $\alpha$-Methylstyrol, Methylmethacrylat oder N-Phenylmaleinimid, ersetzt werden können.

Zusätzlich können bei der Pfropfpolymerisation Molekulargewichtsregler eingesetzt werden, vorzugsweise in Mengen von 0,05 bis 2 Gew.-%, besonders bevorzugt in Mengen von 0,1 bis 1 Gew.-% (jeweils bezogen auf Gesamtmonomermenge bei der Pfropfpolymerisationsreaktion).

Geeignete Molekulargewichtsregler sind beispielsweise n-Dodecylmercaptan, t-Dodecylmercaptan, dimeres $\alpha$-Methylstyrol.

Als Initiatoren kommen praktisch alle als Radikalbildner fungierende Substanzen in Betracht. Beispiele hierfür sind anorganische und organische Peroxide, z.B. $H_2O_2$, Di-tert.-butylperoxid, Cumolhydroperoxid, Dicyclohexylpercarbonat, tert.-Butylhydroperoxid, p-Menthanhydroperoxid, Azoinitiatoren wie z.B. Azobisisobutyronitril, anorganische Persalze wie Ammonium-, Natrium- oder Kaliumpersulfat, Kaliumperphosphat, Natriumperborat sowie Redox-Systeme, die sich aus einem in der Regel organischen Oxidationsmittel und einem Reduktionsmittel zusammensetzen, wobei vorzugsweise im Reaktionsmedium zusätzlich Schwermetallionen vorhanden sind (siehe H. Logemann in Houben-Weyl, Methoden der Organischen Chemie, Band 14/1, S. 263 bis 297).

Bevorzugte Initiatoren sind Ammonium-, Natrium- und Kaliumpersulfat, besonders bevorzugt ist Kaliumpersulfat.

Die Reaktionstemperatur bei der Pfropfkautschukherstellung ist 30° bis 150°C, vorzugsweise 40° bis 90°C.

Als Emulgatoren können die üblichen anionischen Emulgatoren wie Alkylsulfate, Alkylsulfonate, Aralkylsulfonate, Seifen alkalischer disproportionierter oder hydrierter Abietin- oder Tallölsäuren, Seifen gesättigter oder ungesättigter Fettsäuren, Emulgatoren auf Basis von Verbindungen mit cyclischen Kohlenwasserstoffgerüsten gemäß DE-OS 3 919 548 und DE-OS 3 925 634 verwendet werden, vorzugsweise werden Emulgatoren mit Carboxylgruppen (z. B Salze von $C_{10}$-$C_{18}$-Fettsäuren, Salze der disproportionierten Abietinsäure) eingesetzt.

Die Struktur der Pfropfkautschukteilchen kann durch transmissionselektronenmikroskopische Verfahren (z. B. nach Kontrastierung mit Osmiumtetroxid, vgl. z.B. J.A. Manson, L.H. Sperling: Polymer Blends and Composites (Plenum Press, New York/London, 1976), S. 57-58 und dort zitierte Literatur) detektiert werden. Dabei müssen die Pfropfkautschukteilchen in den elektronenmikroskopischen Aufnahmen (das heißt, in der Abbildung der Schnittfläche) ungleichmäßige zellenförmige Einschlüsse des harzbildenden Polymeren enthalten und eine unregelmäßig gezackte Struktur an der Teilchenoberfläche zeigen. Es müssen pro Teilchen 5 bis 30, vorzugsweise 7 bis 25 und besonders bevorzugt 10 bis 20 Zacken vorhanden sein, die sich von einem idealisierten runden Teilchen (mit einem Teilchendurchmesser d) durch einen Durchmesser d+d/x mit x = 3 bis 15, vorzugsweise 4 bis 12 und besonders bevorzugt 5 bis 10, unterscheiden.

Schematisch:

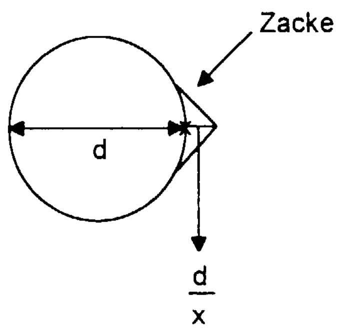


Als durch Masse- oder Lösungspolymerisation hergestellte teilchenförmige Pfropfkautschukpolymere vom ABS-Typ (Komponente B) kommen praktisch alle ABS-Polymerisate mit der für Masse-ABS-Typen charakteristischen Morphologie in Frage.

Diese Morphologie läßt sich im allgemeinen als Zellenmorphologie bezeichnen, prinzipiell können jedoch auch alle anderen bei Masse- oder Lösungspolymerisation durch Variation der Reaktionsbedingungen einstellbaren Morphologien (z.B Teilchen mit Knäuel-, Kapsel-, Schalen-, Fäden- oder Labyrinthstruktur) Verwendung finden.

Die erfindungsgemäß als Komponente B) geeigneten Masse-ABS-Polymerisate weisen im allgemeinen Kautschukgehalte von 4 bis 35 Gew.-%, vorzugsweise 5 bis 30 Gew.-% und besonders bevorzugt 6 bis 25 Gew.-% auf.

Die Größe der Kautschukphase kann im Abhängigkeit der Reaktionsbedingungen im Herstellprozeß in weiten Grenzen variiert werden, z.B. sind prinzipiell mittlere Teilchendurchmesser der Kautschukphase von ca. 100 nm bis über 10 000 nm möglich (ermittelt z.B. durch Ausmessen elektronenmikroskopischer Aufnahmen).

Vorzugsweise werden Masse-ABS-Polymerisate mit mittleren Teilchendurchmessern der Kautschukphase von 200 nm bis 5 000 nm, besonders bevorzugt 400 nm bis 2 000 nm eingesetzt.

Als Kautschukkomponente bei der Herstellung der über Masse- oder Lösungspolymerisation zugänglichen Pfropfkautschukpolymere B) wird in der Regel ein löslicher unvernetzter Kautschuk (vorzugsweise aufgebaut aus Butadien oder aus Butadien/Styrol-Gemischen, z.B. in Form von Blockcopolymer oder Sternpolymer) eingesetzt; als Pfropfmonomere können prinzipiell die bei der Herstellung von Pfropfkautschukpolymer A) beschriebenen Monomeren, vorzugsweise Styrol/Acrylnitril-Gemische, verwendet werden.

Die Herstellung solcher Polymerisate ist bekannt und z.B. in EP 67 536, EP 103 657, EP 412 801, EP 505 798, DE-OS 26 59 175, US-PS 4 252 911, US-PS 4 362 850, US-PS 5 286 792 bzw. der in diesen Schriften zitierten Literatur beschrieben.

Als gegebenenfalls zusätzlich einsetzbare thermoplastische kautschukfreie Harzkomponenten C) kommen beispielsweise in Frage:

Styrol/Acrylnitril-Copolymerisate, α-Methylstyrol/Acrylnitril-Copolymerisate, Styrol/α-Methylstyrol/Acrylnitril-Terpolymerisate, Styrol/Methylmethacrylat-Copolymerisate, Methylmethacrylat/Acrylnitril-Copolymerisate, Polymethylmethacrylat, Styrol/Acrylnitril/N-Phenylmaleinimid-Terpolymerisate. Einzelheiten zur Herstellung dieser Harze sind beispielsweise in der DE-AS 2 420 358 und der DE-AS 2 724 360 beschrieben. Durch Masse- bzw. Lösungspolymerisation hergestellte Vinylharze haben sich besonders bewährt.

Außer derartigen aus Vinylmonomeren aufgebauten Thermoplastharzen ist auch die Verwendung von z.B. aromatischen Polycarbonaten, aromatischen Polyestercarbonaten, Polyestern, Polyamiden als Harzkomponente C) möglich.

Geeignete thermoplastische Polycarbonate bzw. Polyestercarbonate sind bekannt (vgl. z.B. DE-AS 1 495 626, DE-OS 2 232 877, DE-OS 2 703 376, DE-OS 2 714 544, DE-OS 3 000 610, DE-OS 3 832 396, DE-OS 3 077 934), z.B. herstellbar durch Umsetzung von Diphenolen der Formeln (I) und (II)

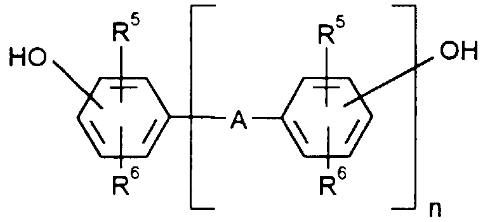

(I)

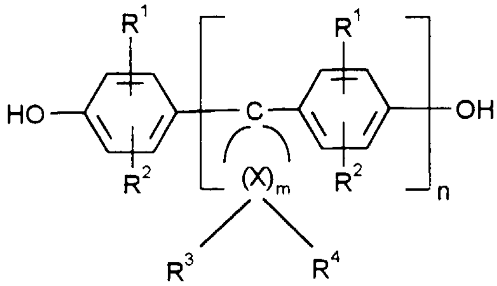

(II)

worin

| | |
|---|---|
| A | eine Einfachbindung, $C_1$-$C_5$-Alkylen, $C_2$-$C_5$-Alkyliden, $C_5$-$C_6$-Cycloalkyliden, -O-, -S-, -SO-, $-SO_2-$ oder -CO- ist, |
| $R^5$ und $R^6$ | unabhängig voneinander für Wasserstoff, Methyl oder Halogen, insbesondere für Wasserstoff, Methyl, Chlor oder Brom stehen, |
| $R^1$ und $R^2$ | unabhängig voneinander Wasserstoff, Halogen bevorzugt Chlor oder Brom, $C_1$-$C_8$-Alkyl, bevorzugt Methyl, Ethyl, $C_5$-$C_6$-Cycloalkyl, bevorzugt Cyclohexyl, $C_6$-$C_{10}$-Aryl, bevorzugt Phenyl, oder $C_7$-$C_{12}$-Aralkyl, bevorzugt Phenyl-$C_1$-$C_4$-alkyl, insbesondere Benzyl, bedeuten, |
| m | eine ganze Zahl von 4 bis 7, bevorzugt 4 oder 5 ist, |
| n | 0 oder 1 ist, |
| $R^3$ und $R^4$ | für jedes X individuell wählbar sind und unabhängig voneinander Wasserstoff oder $C_1$-$C_6$-Alkyl bedeuten und |
| X | Kohlenstoff bedeutet, |

mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren oder mit Phosgen nach dem Verfahren in homogener Phase (dem sogenannten Pyridinverfahren), wobei das Molekulargewicht in bekannter Weise durch eine entsprechende Menge an bekannten Kettenabbrechern eingestellt werden kann.

Geeignete Diphenole der Formeln (I) und (II) sind z.B. Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 2,2-Bis-(4-hydroxy-3,5-dimethylphenyl)-propan, 2,2-Bis-(4-hydroxy-3,5-dichlorphenyl)-propan, 2,2-Bis-(4-hydroxy-3,5-dibromphenyl)-propan, 1,1-Bis-(4-hydroxyphenyl)-cyclohexan, 1,1-Bis-(4-hydroxyphenyl)-3,3,5-trimethylcyclohexan, 1,1-Bis-(4-hydroxyphenyl)-3,3-dimethylcyclohexan, 1,1-Bis-(4-hydroxyphenyl)-3,3,5,5-tetramethylcyclohexan oder 1,1-Bis-(4-hydroxyphenyl)-2,4,4,-trimethylcyclopentan.

Bevorzugte Diphenole der Formel (I) sind 2,2-Bis-(4-hydroxyphenyl)-propan und 1,1-Bis-(4-hydroxyphenyl)-cyclohexan, bevorzugtes Phenol der Formel (II) ist 1,1-Bis-(4-hydroxyphenyl)-3,3,5-trimethylcyclohexan.

Es können auch Mischungen von Diphenolen eingesetzt werden.

Geeignete Kettenabbrecher sind z.B. Phenol, p-tert.-Butylphenol, langkettige Alkylphenole wie 4-(1,3-Tetramethyl-butyl)phenol gemäß DE-OS 2 842 005, Monoalkylphenole, Dialkylphenole mit insgesamt 8 bis 20 C-Atomen in den Alkylsubstituenten gemäß DE-OS 3 506 472, wie p-Nonylphenol, 2,5-di-tert.-Butylphenol, p-tert.-Octylphenol, p-Dodecylphenol, 2-(3,5-Dimethylheptyl)-phenol und 4-(3,5-Dimethylheptyl)-phenol. Die erforderliche Menge an Kettenabbrechern ist im allgemeinen 0,5 bis 10 Mol-%, bezogen auf die Summe der Diphenole (I) und (II).

Die geeigneten Polycarbonate bzw. Polyestercarbonate können linear oder verzweigt sein; verzweigte Produkte werden vorzugsweise durch den Einbau von 0,05 bis 2,0 Mol-%, bezogen auf die Summe der eingesetzten Diphenole, an drei - oder mehr als dreifunktionellen Verbindungen, z.B. solchen mit drei oder mehr als drei phenolischen OH-Gruppen, erhalten.

Die geeigneten Polycarbonate bzw. Polyestercarbonate können aromatisch gebundenes Halogen, vorzugsweise Brom und/oder Chlor, enthalten; vorzugsweise sind sie halogenfrei.

Sie haben mittlere Molekulargewichte ($\overline{M}_w$, Gewichtsmittel) bestimmt z.B. durch Ultrazentrifugation oder Streulichtmessung von 10 000 bis 200 000, vorzugsweise von 20 000 bis 80 000.

Geeignete thermoplastische Polyester sind vorzugsweise Polyalkylenterephthalate, das heißt, Reaktionsprodukte aus aromatischen Dicarbonsäuren oder ihren reaktionsfähigen Derivaten (z.B. Dimethylestern oder Anhydriden) und aliphatischen, cycloaliphatischen oder arylaliphatischen Diolen und Mischungen solcher Reaktionsprodukte.

Bevorzugte Polyalkylenterephthalate lassen sich aus Terephthalsäuren (oder ihren reaktionsfähigen Derivaten) und aliphatischen oder cycloaliphatischen Diolen mit 2 bis 10 C-Atomen nach bekannten Methoden herstellen (Kunststoff-Handbuch, Band VIII, S. 695 ff, Carl Hanser Verlag, München 1973).

In bevorzugten Polyalkylenterephthalaten sind 80 bis 100, vorzugsweise 90 bis 100 Mol-% der Dicarbonsäurereste, Terephthalsäurereste und 80 bis 100, vorzugsweise 90 bis 100 Mol-% der Diolreste, Ethylenglykol- und/oder Butandiol-1,4-Reste.

Die bevorzugten Polyalkylenterephthalate können neben Ethylenglykol- bzw. Butandiol-1,4-Resten 0 bis 20 Mol-% Reste anderer aliphatischer Diole mit 3 bis 12 C-Atomen oder cycloaliphatischer Diole mit 6 bis 12 C-Atomen enthalten, z.B. Reste von Propandiol-1,3, 2-Ethylpropandiol-1,3, Neopentylglykol, Pentandiol-1,5, Hexandiol-1,6, Cyclohexandi-methanol-1,4, 3-Methylpentandiol-1,3 und -1,6, 2-Ethylhexandiol-1,3, 2,2-Diethylpropandiol-1,3, Hexandiol-2,5, 1,4-Di(β-hydroxyethoxy)-benzol, 2,2,-Bis-4-hydroxycyclohexyl)-propan, 2,4-Dihydroxy-1,1,3,3-tetramethylcyclobutan, 2,2-Bis-(3-β-hydroxyethoxyphenyl)-propan und 2,2-Bis-(4-hydroxypropoxyphenyl)-propan (DE-OS 2 407 647, 2 407 776, 2 715 932).

Die Polyalkylenterephthalate können durch Einbau relativ kleiner Mengen 3- oder 4-wertiger Alkohole oder 3- oder 4-basiger Carbonsäuren, wie sie in der DE-OS 1 900 270 und der US-PS 3 692 744 beschrieben sind, verzweigt werden. Beispiele bevorzugter Verzweigungsmittel sind Trimesinsäure, Trimellithsäure, Trimethylolethan und -propan und Pentaerythrit. Es ist ratsam, nicht mehr als 1 Mol-% des Verzweigungsmittels, bezogen auf die Säurekomponente, zu verwenden.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind und Mischungen dieser Polyalkylenterephthalate.

Bevorzugte Polyalkylenterephthalate sind auch Copolyester, die aus mindestens zwei der oben genannten Alkoholkomponenten hergestellt sind: besonders bevorzugte Copolyester sind Poly-(ethylenglykolbutandiol-1,4)-terephthalate.

Die vorzugsweise geeigneten Polyalkylenterephthalate besitzen im allgemeinen eine Intrinsic-Viskosität von 0,4 bis 1,5 dl/g, vorzugsweise 0,5 bis 1,3 dl/g, insbesondere 0,6 bis 1,2 dl/g, jeweils gemessen in Phenol/o-Dichlorbenzol (1:1 Gew.-Teile) bei 25°C.

Geeignete Polyamide sind bekannte Homopolyamide, Copolyamide und Mischungen dieser Polyamide. Es können dies teilkristalline und/oder amorphe Polyamide sein.

Als teilkristalline Polyamide sind Polyamid-6, Polyamid-6,6, Mischungen und entsprechende Copolymerisate aus diesen Komponenten geeignet. Weiterhin kommen teilkristalline Polyamide in Betracht, deren Säurekomponente ganz oder teilweise aus Terephthalsäure und/oder Isophthalsäure und/oder Korksäure und/oder Sebacinsäure und/oder Azelainsäure und/oder Adipinsäure und/oder Cyclohexandicarbonsäure, deren Diaminkomponente ganz oder teilweise aus m- und/oder p-Xylylen-diamin und/oder Hexamethylendiamin und/oder 2,2,4-Trimethylhexamethylendiamin und/oder 2,2,4-Trimethylhexamethylendiamin und/oder Isophorondiamin besteht und deren Zusammensetzung prinzipiell bekannt ist.

Außerdem sind Polyamide zu nennen, die ganz oder teilweise aus Lactamen mit 7-12 C-Atomen im Ring,

gegebenenfalls unter Mitverwendung einer oder mehrerer der oben genannten Ausgangskomponenten, hergestellt werden.

Besonders bevorzugte teilkristalline Polyamide sind Polyamid-6 und Polyamid-6,6 und ihre Mischungen. Als amorphe Polyamide können bekannte Produkte eingesetzt werden. Sie werden erhalten durch Polykondensation von Diaminen wie Ethylendiamin, Hexamethylendiamin, Decamethylendiamin, 2,2,4- und/oder 2,4,4-Trimethylhexamethylendiamin, m- und/oder p-Xylylen-diamin, Bis-(4-aminocyclohexyl)-methan, Bis-(4-aminocyclohexyl)-propan, 3,3'-Dimethyl-4,4'-diamino-dicyclohexylmethan, 3-Aminomethyl,3,5,5,-trimethylcyclohexylamin, 2,5- und/oder 2,6-Bis-(aminomethyl)-norbornan und/oder 1,4-Diaminomethylcyclohexan mit Dicarbonsäuren wie Oxalsäure, Adipinsäure, Azelainsäure, Azelainsäure, Decandicarbonsäure, Heptadecandicarbonsäure, 2,2,4- und/oder 2,4,4-Trimethyladipinsäure, Isophthalsäure und Terephthalsäure.

Auch Copolymere, die durch Polykondensation mehrerer Monomerer erhalten werden, sind geeignet, ferner Copolymere, die unter Zusatz von Aminocarbonsäuren wie ε-Aminocapronsäure, ω-Aminoundecansäure oder ω-Aminolaurinsäure oder ihren Lactamen, hergestellt werden.

Besonders geeignete amorphe Polyamide sind die Polyamide hergestellt aus Isophthalsäure, Hexamethylendiamin und weiteren Diaminen wie 4,4'-Diaminodicyclohexylmethan, Isophorondiamin, 2,2,4- und/oder 2,4,4-Trimethylhexamethylendiamin, 2,5- und/oder 2,6-Bis-(aminomethyl)-norbornen; oder aus Isophthalsäure, 4,4'-Diaminodicyclohexylmethan und ε-Caprolactam; oder aus Isophthalsäure, 3,3'-Dimethyl-4,4'-diamino-dicyclohexylmethan und Laurinlactam; oder aus Terephthalsäure und dem Isomerengemisch aus 2,2,4- und/oder 2,4,4-Trimethylhexamethylendiamin.

Anstelle des reinen 4,4'-Diaminodicyclohexylmethans können auch Gemische der stellungsisomeren Diaminodicyclohexylmethane eingesetzt werden, die sich zusammensetzen aus

70 bis 99 Mol-% des 4,4'-Diamino-Isomeren
1 bis 30 Mol-% des 2,4'-Diamino-Isomeren
0 bis 2 Mol-% des 2,2'-Diamino-Isomeren und

gegebenenfalls entsprechend höher kondensierten Diaminen, die durch Hydrierung von Diaminodiphenylmethan technischer Qualität erhalten werden. Die Isophthalsäure kann bis zu 30 % durch Terephthalsäure ersetzt sein.

Die Polyamide weisen vorzugsweise eine relative Viskosität (gemessen an einer 1 gew.-%igen Lösung in m-Kresol bei 25°C) von 2,0 bis 5,0, besonders bevorzugt von 2,5 bis 4,0 auf.

Die Abmischung der einzelnen Komponenten A, B und gegebenenfalls C ist auf verschiedene Weise möglich.

Vorzugsweise wird die Pfropfkautschukkomponente A) durch bekannte Verfahren, beispielsweise durch Sprühtrocknung oder durch Zusatz von Salzen und/oder Säuren, Waschen der Fällprodukte und Trocknung des Pulvers isoliert und danach mit der Pfropfkautschukkomponente B) und gegebenenfalls der Harzkomponente C) vermischt (vorzugsweise auf Mehrwalzenstühlen, Mischextrudern oder Innenknetern).

Wurde die Harzkomponente C) durch Emulsionspolymerisation erzeugt, so kann dieser Latex mit dem Latex der Komponente A) gemischt und gemeinsam aufgearbeitet werden.

Den erfindungsgemäßen Formmassen können bei Herstellung, Aufarbeitung, Weiterverarbeitung und Endverformung die erforderlichen bzw. zweckmäßigen Additive zugesetzt werden, z.B. Antioxidantien, UV-Stabilisatoren, Peroxidzerstörer, Antistatika, Gleitmittel, Entformungsmittel, Flammschutzmittel, Füll- oder Verstärkerstoffe (Glasfasern, Kohlefasern etc.), Farbmittel.

Die Endverformung kann auf handelsüblichen Verarbeitungsaggregaten vorgenommen werden und umfaßt z.B. Spritzgießverarbeitung, Plattenextrusion mit gegebenenfalls anschließender Warmverformung, Kaltverformung, Extrusion von Rohren und Profilen, Kalander-Verarbeitung.

In den folgenden Beispielen sind die angegebenen Teile immer Gewichtsteile und die angegebenen % immer Gewichtsprozente, wenn nicht anders angegeben.

## Beispiele

### Pfropfkautschukpolymer A mit gezackter Struktur (erfindungsgemäß)

40 Gew.-Teile (gerechnet als Feststoff) eines durch radikalische Polymerisation hergestellten anionisch emulgierten Polybutadienlatex mit einem $d_{50}$-Wert von 284 nm und einem Quellungsindex von 59 werden mit Wasser auf einen Feststoffgehalt von ca. 20 Gew.-% gebracht, wonach auf 63°C erwärmt und mit 0,5 Gew.-Teilen Kaliumperoxodisulfat (gelöst in Wasser) versetzt wird.

Danach werden 60 Gew.-Teile eines Gemisches aus 72 Gew.-% Styrol und 28 Gew.-% Acrylnitril und 0,1 Gew.-Teile tert.-Dodecylmercaptan innerhalb von 4 h so zudosiert, daß im Verlauf der Polymerisationsreaktion folgende Gehalte an nicht umgesetzten Monomer im Reaktionsgemisch resultierten (ermittelt durch Probenahme, Zusatz von

Phenothiazin, Koagulation des Polymeranteils und Berechnung der unumgesetzten Monomermenge):

| Zeitpunkt der Probenahme (min nach Reaktionsbeginn) | Anteil an nicht umgesetztem Monomer im Reaktionsgemisch (Gew.-% bezogen auf jeweils zudosierte Monomermenge) |
|---|---|
| 20 | 8,4 |
| 40 | 14,2 |
| 60 | 19,2 |
| 80 | 20,1 |
| 100 | 18,3 |
| 120 | 16,1 |
| 140 | 13,6 |
| 160 | 11,0 |
| 180 | 7,4 |
| 200 | 2,1 |
| 220 | 1,1 |
| 240 | 2,0 |
| 260 | 0,8 |
| 280 | 0,7 |
| 300 | 0,5 |

Parallel zu den Monomeren wird innerhalb von 4 h 1 Gew.-Teil (gerechnet als Festsubstanz) des Natriumsalzes eines Harzsäuregemisches (Dresinate 731, gelöst in alkalisch eingestelltem Wasser) als Emulgator zudosiert. Nach einer 1-stündigen Nachreaktionszeit wird der Pfropfkautschuk nach Zugabe von ca. 1,0 Gew.-Teilen eines phenolischen Antioxidans mit einer Mischung aus wäßriger Magnesiumsulfat-Lösung und Essigsäure koaguliert; nach dem Waschen mit Wasser wird das resultierende Pulver bei 70°C im Vakuum getrocknet.

**Pfropfkautschukpolymer X ohne gezackte Struktur (Vergleich)**

Die unter "Pfropfkautschukpolymer A" beschriebene Reaktion wurde wiederholt, wobei ein Polybutadienlatex mit einem $d_{50}$-Wert von 285 nm und einem Quellungsindex von 20 zum Einsatz kam.

**Pfropfkautschukpolymer Y ohne gezackte Struktur (Vergleich)**

Die unter "Pfropfkautschukpolymer A" beschriebene Reaktion wurde wiederholt, wobei die Monomeren so zudosiert wurden, daß im Verlauf der Polymerisationsreaktion folgende Gehalte an nicht umgesetztem Monomer im Reaktionsgemisch resultierten:

| Zeitpunkt der Probenahme (min nach Reaktionsbeginn) | Anteil an nicht umgesetztem Monomer im Reaktionsgemisch (Gew.-% bezogen auf jeweils zudosierte Monomermenge) |
|---|---|
| 20 | 4,1 |
| 40 | 5,2 |
| 60 | 4,3 |
| 80 | 3,9 |
| 100 | 4,6 |
| 120 | 4,5 |

(fortgesetzt)

| Zeitpunkt der Probenahme (min nach Reaktionsbeginn) | Anteil an nicht umgesetztem Monomer im Reaktionsgemisch (Gew.-% bezogen auf jeweils zudosierte Monomermenge) |
|---|---|
| 140 | 4,5 |
| 160 | 4,1 |
| 180 | 4,0 |
| 200 | 4,9 |
| 220 | 5,1 |
| 240 | 4,7 |
| 260 | 3,1 |
| 280 | 2,0 |
| 300 | 0,6 |

**Pfropfkautschukpolymer B1**

Masse-ABS Magnum 3105 FP der Dow mit einem Kautschukgehalt von ca. 7 Gew.-% und einer mittleren Teilchengröße der Kautschukphase von ca. 800 nm.

**Pfropfkautschukpolymer B2**

Masse-ABS Magnum 3504 der Dow mit einem Kautschukgehalt von ca. 10 Gew.-% und einer mittleren Teilchengröße der Kautschukphase von ca. 900 nm.

**Formmassen**

Die oben beschriebenen Pfropfkautschukpolymerkomponenten werden in den in Tabelle 1 angegebenen Anteilen, 2 Gew.-Teilen Pentaerythrittetrastearat in einem Innenkneter vermischt und nach Granulierung durch Spritzgießen zu Prüfstäben und zu einer ebenen Platte (zur Beurteilung der Oberfläche) verarbeitet.

Folgende Daten wurden ermittelt:

Kerbschlagzähigkeit bei Raumtemperatur ($a_k^{RT}$) und bei -40°C ($a_k^{-40°C}$) nach ISO 180/1A (Einheit: kJ/m$^2$), Kugeldruckhärte $H_c$ nach DIN 53 456 (Einheit: N/mm$^2$), Wärmeformbeständigkeit (Vicat B) nach DIN 53 460 (Einheit: °C), Fließverhalten MVI nach DIN 53 735U (Einheit: cm$^3$/10 min) und Glanzverhalten nach DIN 67 530 bei einem Reflektionswinkel von 60° (Reflektometerwert).

Zur Illustration wurde von einer erfindungsgemäßen Formmasse (Beispiel 4) eine elektronenmikroskopische Aufnahme angefertigt (Kontrastierung mit Osmiumtetroxid). (Vergrößerungen 10 000:1, 23 000:1 und 40 000:1, Figur 1 bis 3).

Aus den Beispielen ist ersichtlich, daß die erfindungsgemäßen Formmassen im Vergleich zu reinen Masse-ABS-Polymerisaten drastisch erhöhte Zähigkeitswerte aufweisen, dabei bleiben die sonstigen Eigenschaften, insbesondere der niedrige Glanzgrad, erhalten.

**Tabelle 1** Zusammensetzungen und Prüfdaten der untersuchten Formmassen

| Beispiel | Pfropfkautschuk A (Gew.-Teile) | Pfropfkautschuk X (Gew.-Teile) | Pfropfkautschuk Y (Gew.-Teil) | Pfropfkautschuk B1 (Gew.-Teile) | Pfropfkautschuk B2 (Gew.-Teile) | $a_k^{RT}$ (kJ/m²) | $a_k^{-40°C}$ (kJ/m²) | $H_c$ (N/mm²) | Vicat (°C) | MVI (cm³/10 min) | Glanzgrad |
|---|---|---|---|---|---|---|---|---|---|---|---|
| 1 | 6,25 | - | - | 93,75 | - | 20 | 8 | 105 | 105 | 6,4 | 66 |
| 2 (Vergleich) | - | 6,25 | - | 93,75 | - | 16 | 7 | 104 | 105 | 5,6 | 67 |
| 3 (Vergleich) | - | - | 6,25 | 93,75 | - | 15 | 6 | 103 | 101 | 5,1 | 69 |
| 4 | 18,75 | - | - | 81,25 | - | 28 | 15 | 93 | 103 | 5,8 | 69 |
| 5 (Vergleich) | - | 18,75 | - | 81,25 | - | 23 | 10 | 91 | 104 | 5,0 | 70 |
| 6 (Vergleich) | - | - | 18,75 | 81,25 | - | 21 | 9 | 92 | 103 | 4,9 | 69 |
| 7 (Vergleich) | - | - | - | 100 | - | 13 | 5 | 118 | 105 | 6,2 | 67 |
| 8 | 7,5 | - | - | - | 92,5 | 32 | 11 | 84 | 101 | 6,3 | 63 |
| 9 (Vergleich) | - | 7,5 | - | - | 92,5 | 28 | 9 | 83 | 99 | 6,0 | 64 |
| 10 (Vergleich) | - | - | 7,5 | - | 92,5 | 27 | 9 | 80 | 98 | 5,5 | 66 |
| 11 (Vergleich) | - | - | - | - | 100 | 23 | 8 | 91 | 104 | 6,0 | 62 |

## Patentansprüche

1. Thermoplastische Formmassen enthaltend

A) 1 bis 60 Gew.-Teile mindestens eines durch Emulsionspolymerisation hergestellten teilchenförmigen Pfropfkautschukpolymeren vom ABS-Typ, bei dem mindestens 50 % der Pfropfkautschukteilchen (Anzahl) eine solche über transmissionselektronenmikroskopische Aufnahmen detektierbare Struktur aufweisen, in der die einzelnen Teilchen ungleichmäßige zellenförmige Einschlüsse von harzbildendem Polymer enthalten und die Oberfläche der Teilchen eine solche unregelmäßig gezackte Struktur zeigt, daß pro abgebildetem Teilchen 5 bis 30 solcher Zacken vorhanden sind, die sich von einem idealisierten runden Teilchen (mit einem Durchmesser d) durch einen Durchmesser d + d/x mit x = 3 bis 15 unterscheiden, erhältlich durch Emulsionspolymerisation von harzbildenden Monomeren in Gegenwart des in Latexform vorliegenden Kautschuks mit einem Quellungsindex ≥30 (in Toluol) und mit einer einer Glastemperatur unterhalb von 0°C derart, daß während 25 bis 90 % der Gesamtreaktionszeit im Reaktionsgemisch eine Menge von 5 bis 70 Gew.-% (bezogen auf gesamtes bis zum jeweiligen Zeitpunkt eingesetztes) an nicht umgesetzten Monomer vorhanden ist,

B) 40 bis 99 Gew.-Teile mindestens eines durch Lösungs- oder Massepolymerisation hergestellten teilchenförmigen Pfropfkautschukpolymeren vom ABS-Typ mit der für Masse-ABS-Typen charakteristischen Morphologie und gegebenenfalls

C) 0 bis 200 Gew.-Teile mindestens eines thermoplastischen kautschukfreien Harzes.

2. Thermoplastische Formmassen gemäß Anspruch 1 enthaltend

A) 2 bis 50 Gew.-Teile mindestens eines durch Emulsionspolymerisation hergestellten teilchenförmigen Pfropfkautschukpolymeren vom ABS-Typ, bei dem mindestens 60 % der Pfropfkautschukteilchen (Anzahl) eine solche über transmissionselektronenmikroskopische Aufnahmen detektierbare Struktur aufweisen, in der die einzelnen Teilchen ungleichmäßige zellenförmige Einschlüsse von harzbildendem Polymer enthalten und die Oberfläche der Teilchen eine solche unregelmäßig gezackte Struktur zeigt, daß pro abgebildetem Teilchen 7 bis 25 solcher Zacken vorhanden sind, die sich von einem idealisierten runden Teilchen (mit einem Durchmesser d) durch einen Durchmesser d + d/x mit x = 4 bis 12 unterscheiden,

B) 50 bis 98 Gew.-Teile mindestens eines durch Lösungs- oder Massepolymerisation hergestellten teilchenförmigen Pfropfkautschukpolymeren vom ABS-Typ mit der für Masse-ABS-Typen charakteristischen Morphologie und gegebenenfalls

C) 0 bis 100 Gew.-Teile mindestens eines thermoplastischen kautschukfreien Harzes.

3. Thermoplastische Formmassen gemäß Anspruch 1, wobei in Komponente A) 40 bis 90 Gew.-Teile von harzbildenden Monomeren in Gegenwart von 10 bis 60 Gew.-Teilen Kautschuklatex polymerisiert werden.

4. Thermoplastische Formmassen gemäß Anspruch 1, wobei derart polymerisiert wird, daß während 30 bis 80 % der Gesamtreaktionszeit im Reaktionsgemisch eine Menge von 7,5 bis 60 Gew.-% an nicht umgesetztem Monomer vorhanden ist.

5. Thermoplastische Formmassen gemäß Ansprüchen 1 und 2, dadurch gekennzeichnet, daß die teilchenförmigen Pfropfkautschukpolymere aus Polybutadien und aufgepfropftem Copolymer aus Styrol und Acrylnitril bestehen.

6. Thermoplastische Formmassen gemäß Ansprüchen 1 bis 5, dadurch gekennzeichnet, daß als Thermoplastkomponente C mindestens ein Harz ausgewählt aus α-Methylstyrol/Acrylnitril-Copolymer, aromatischem Polycarbonat, aromatischem Polyestercarbonat, Polyester, Polyamid enthalten ist.

7. Verwendung der thermoplastischen Formmassen gemäß Ansprüchen 1 bis 6 zur Herstellung von Formteilen.

## Claims

1. Thermoplastic moulding compositions containing

A) 1 to 60 parts by weight of at least one particulate graft rubber polymer of the ABS type which is produced by emulsion polymerisation, in which at least 50 % of the graft rubber particles (number) have a structure detectable via transmission electron microscopy photographs in which the individual particles contain irregular cellular inclusions of resin-forming polymer and the surface of the particles has an irregular jagged structure such that 5 to 30 of such peaks are present per depicted particle, which particles differ from an idealised round particle (having a diameter d) by a diameter d + d/x, where x = 3 to 15, obtainable by the emulsion polymerisation of resin-forming monomers in the presence of the rubber which exists in latex form, which has a swelling index ≥30 (in toluene), and which has a glass transition temperature below 0°C, in such a way that during 25 to 90 % of the total time of reaction an amount of 5 to 70 % by weight (with respect to the total amount used up to the respective point in time) of unreacted monomer is present in the reaction mixture,

B) 40 to 99 parts by weight of at least one particulate graft rubber polymer of the ABS type which is produced by solution or bulk polymerisation and which has the morphology which is characteristic of bulk types of ABS, and optionally

C) 0 to 200 parts by weight of at least one thermoplastic, rubber-free resin.

**2.** Thermoplastic moulding compositions according to claim 1, containing

A) 2 to 50 parts by weight of at least one particulate graft rubber polymer of the ABS type which is produced by emulsion polymerisation, in which at least 60 % of the graft rubber particles (number) have a structure detectable via transmission electron microscopy photographs in which the individual particles contain irregular cellular inclusions of resin-forming polymer and the surface of the particles has an irregular jagged structure such that 7 to 25 of such peaks are present per depicted particle, which particles differ from an idealised round particle (having a diameter d) by a diameter d + d/x, where x = 4 to 12,

B) 50 to 98 parts by weight of at least one particulate graft rubber polymer of the ABS type which is produced by solution or bulk polymerisation and which has the morphology which is characteristic of bulk types of ABS, and optionally

C) 0 to 100 parts by weight of at least one thermoplastic, rubber-free resin.

**3.** Thermoplastic moulding compositions according to claim 1, wherein in component A) 40 to 90 parts by weight of resin-forming monomers are polymerised in the presence of 10 to 60 parts by weight of rubber latex.

**4.** Thermoplastic moulding compositions according to claim 1, wherein polymerisation is conducted in such a way that during 30 to 80 % of the total time of reaction an amount of 7.5 to 60 % by weight of unreacted monomer is present in the reaction mixture.

**5.** Thermoplastic moulding compositions according to claims 1 and 2, characterised in that the particulate graft rubber polymers consist of polybutadiene and a grafted-on copolymer of styrene and acrylonitrile.

**6.** Thermoplastic moulding compositions according to claims 1 to 5, characterised iR that at least one resin selected from an α-methylstyrene/acrylonitrile copolymer, an aromatic polycarbonate, an aromatic polyester carbonate, a polyester or a polyamide is contained as the thermoplastic component C.

**7.** Use of the thermoplastic moulding compositions according to claims 1 to 6 for the production of mouldings.

## Revendications

**1.** Masses à mouler thermoplastiques, contenant :

A) 1 à 60 parties en poids d'au moins un polymère caoutchouc greffé particulaire, préparé par polymérisation en émulsion, de type ABS, dans lequel au moins 50% des particules de caoutchouc greffé (nombre) présentent une structure détectable par un relevé de microscopie électronique à transmission, dans laquelle les particules individuelles contiennent des inclusions alvéolaires hétérogènes de polymère résineux et la surface des particules présente une structure dentée irrégulière telle que, par particule formée, 5 à 30 de ces dents sont

présentes, qui se différencient d'une particule ronde idéalisée (avec un diamètre d) par un diamètre d + d/x avec x = 3 à 15, pouvant être obtenues par polymérisation en émulsion de monomères résineux en présence de caoutchouc sous forme d'un latex, avec un indice de gonflement ≥ 30 (dans le toluène) et avec une température de transition vitreuse inférieure à 0°C, de sorte que pendant 25 à 90% du temps total de réaction, une quantité de 5 à 70% en poids (sur base de la quantité totale mise en oeuvre jusqu'à chaque moment) en monomère n'ayant pas réagi est présente dans le mélange réactionnel,
B) 40 à 99 parties en poids d'au moins un polymère de caoutchouc greffé, particulaire, préparé par polymérisation en solution ou en masse, de type ABS avec la morphologie caractéristique des masses de type ABS et facultativement,
C) 0 à 200 parties en poids d'au moins une résine thermoplastique exempte de caoutchouc.

**2.** Masses à mouler thermoplastiques suivant la revendication 1, contenant :

A) 2 à 50 parties en poids d'au moins un polymère caoutchouc greffé particulaire, préparé par polymérisation en émulsion, de type ABS, dans lequel au moins 60% des particules de caoutchouc greffé (nombre) présentent une structure détectable par un relevé de microscopie électronique à transmission dans laquelle les particules individuelles contiennent des inclusions alvéolaires hétérogènes de polymère résineux et la surface des particules présente une structure dentée irrégulière telle que, par particule formée, 7 à 25 de ces dents sont présents, qui se différencient d'une particule ronde idéalisée (avec un diamètre d) par un diamètre d + d/x avec x = 4 à 12,
B) 50 à 98 parties en poids d'au moins un polymère de caoutchouc greffé, particulaire, préparé par polymérisation en solution ou en masse, de type ABS avec la morphologie caractéristique des masses de type ABS et facultativement,
C) 0 à 100 parties en poids d'au moins une résine thermoplastique exempte de caoutchouc.

**3.** Masses à mouler thermoplastiques suivant la revendication 1, où dans le composant A), on polymérise 40 à 90 parties en poids de monomères résineux en présence de 10 à 60 parties en poids de latex caoutchouc.

**4.** Masses à mouler thermoplastiques suivant la revendication 1, où on polymérise de sorte que pendant 30 à 80% de la durée globale de réaction, une quantité de 7,5 à 60% en poids de monomère n'ayant pas réagi est présente dans le mélange réactionnel.

**5.** Masses à mouler thermoplastiques suivant les revendications 1 et 2, caractérisées en ce que le polymère caoutchouc greffé particulaire consiste en du polybutadiène et un copolymère greffé de styrène et d'acrylonitrile.

**6.** Masses à mouler thermoplastiques suivant les revendications 1 à 5, caractérisées en ce que le composant thermoplastique C contient au moins une résine choisie parmi les copolymères a-méthylstyrène/acrylonitrile, les polycarbonates aromatiques, les polyestercarbonates aromatiques, les polyesters, les polyamides.

**7.** Utilisation de masses à mouler thermoplastiques suivant les revendications 1 à 6, pour la préparation d'articles moulés.

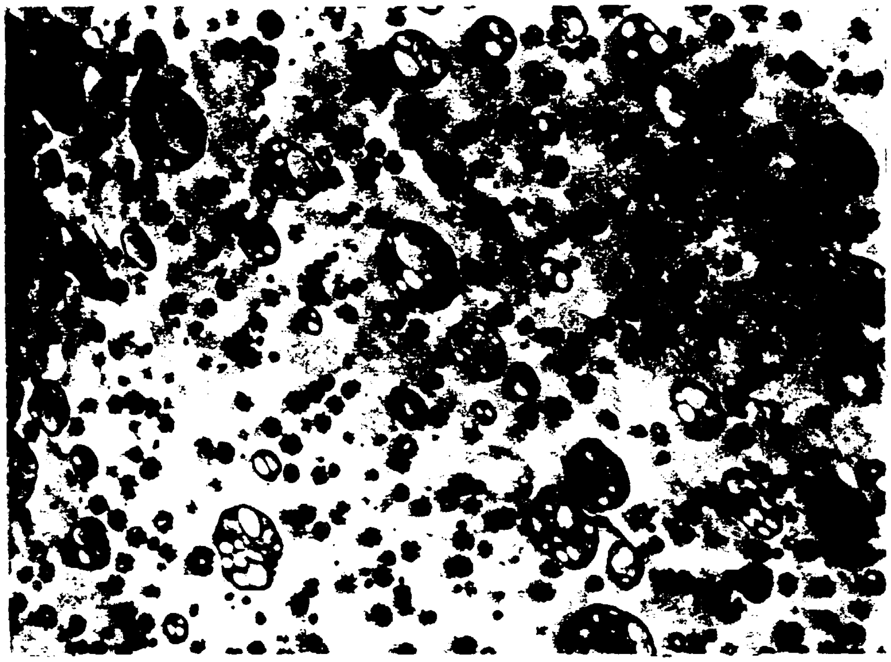

10 000 : 1

1 µm

1 cm

Figur 1

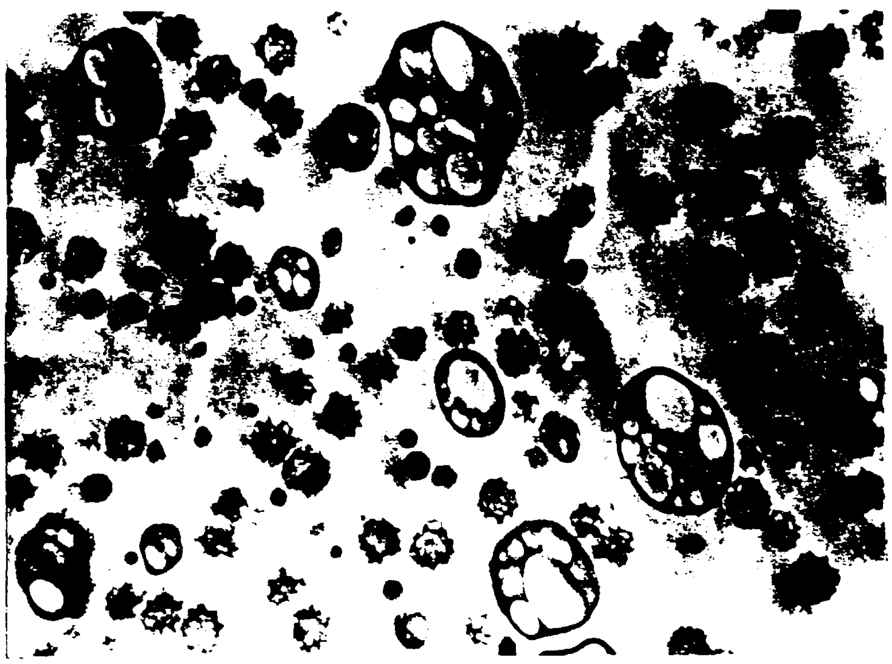

23 000 : 1

200 nm

0,46 cm

Figur 2

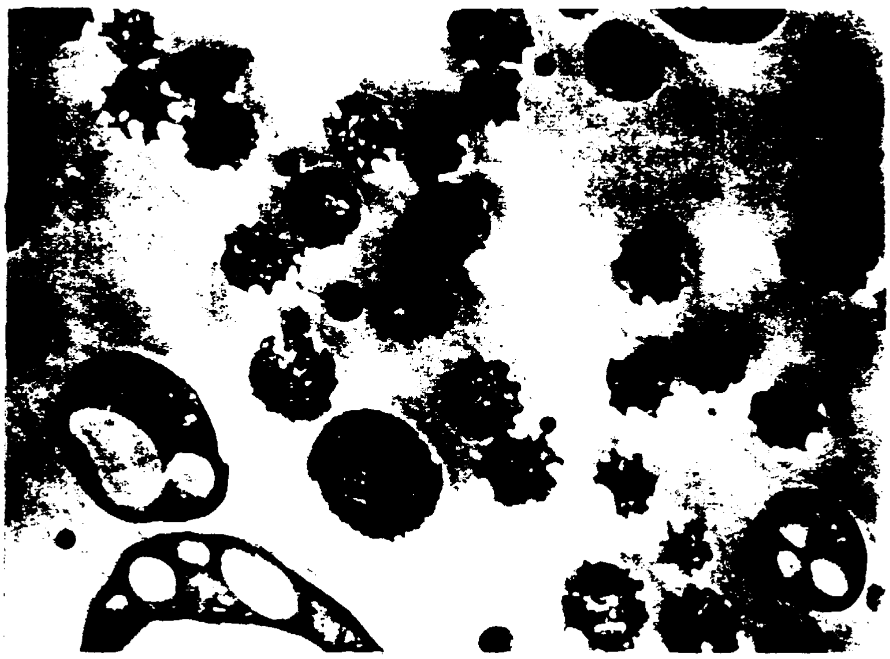

40 000 : 1

200 nm

0,8 cm

Figur 3